(19) Europäisches Patentamt
European Patent Office
Office européen des brevets

(11) **EP 2 618 299 A1**

(12) **EUROPEAN PATENT APPLICATION**
published in accordance with Art. 153(4) EPC

(43) Date of publication:
**24.07.2013 Bulletin 2013/30**

(51) Int Cl.:
**G06Q 50/00** (2012.01)

(21) Application number: **11825222.0**

(22) Date of filing: **14.09.2011**

(86) International application number:
**PCT/JP2011/071044**

(87) International publication number:
**WO 2012/036222 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2010 JP 2010206883**

(71) Applicant: **NTT DOCOMO, INC.**
**Chiyoda-ku**
**Tokyo 100-6150 (JP)**

(72) Inventors:
• **KOBAYASHI Motonari**
**Tokyo 100-6150 (JP)**

• **TERADA Masayuki**
**Tokyo 100-6150 (JP)**
• **NAGATA Tomohiro**
**Tokyo 100-6150 (JP)**
• **OKAJIMA Ichiro**
**Tokyo 100-6150 (JP)**

(74) Representative: **Viering, Jentschura & Partner**
**Am Brauhaus 8**
**01099 Dresden (DE)**

(54) **POPULATION CALCULATION SYSTEM AND POPULATION CALCULATION METHOD**

(57) A population calculation system includes: an acquisition module acquiring the number of counted people who are counted as samples in a count area containing a target area; a first calculation module calculating population in the count area on the basis of the number of counted people acquired and a scaling factor for determining the population in the count area on the basis of the number of counted people; a second calculation module calculating population in the target area on the basis of the population in the count area thus calculated; a quantization module concealing the population in the count area or the population in the target area on the basis of a class interval that is a product of concealment reference that is a reference value of a minimum summation unit and the scaling factor in calculation processing; and an output module outputting concealed population in the target area.

**Fig.1**

## Description

### Technical Field

One aspect of the present invention relates to a population calculation system for calculating population that is concealed and a population calculation method thereof.

### Background Art

Conventionally, methods for finding population in a specific area have been known. For example, Patent Literature 1 discloses a population distribution analyzing apparatus including area setting means for setting an area in which population distribution of a plurality of users carrying respective portable terminals is to be analyzed, positional information acquiring means for acquiring positional information of each of the portable terminals, and analyzing means for analyzing the population distribution of the users in the set area on the basis of the acquired positional information.

### Citation List

### Patent Literature

[Patent Literature 1] Japanese Patent Application Laid-Open Publication No. 2003-30373

### Summary of Invention

### Technical Problem

However, when performing summation on population with an apparatus described in Patent Literature 1, for example, there are occasions that an individual is identified on the basis of population data that is a result of the summation, which may cause a problem in privacy, for example. Accordingly, it is required to hide information by superimposing noise on population data to conceal the population data. However, when unnecessarily large noise is superimposed in concealing population data, deviation from the population data before concealment becomes large, and thus there is a possibility that reliability of information on the population data decreases.

Therefore, one aspect of the present invention aims to provide a population calculation system that can conceal and present population while maintaining the reliability of population data at or above a certain level, and a population calculation method thereof.

### Solution to Problem

A population calculation system according to one aspect of the present invention is a population calculation system for calculating concealed population in a target area, the system including acquisition means for acquiring the number of counted people who are counted as samples in a count area containing the target area; population calculation means for calculating population in the count area on the basis of the number of counted people acquired by the acquisition means and a scaling factor for determining the population in the count area on the basis of the number of counted people and calculating population in the target area on the basis of the population in the count area thus calculated; concealing means for concealing the population in the count area or the population in the target area on the basis of a class interval that is a product of concealment reference that is a reference value of a minimum summation unit and the scaling factor in calculation processing by the population calculation means; and output means for outputting the population in the target area obtained through concealment processing by the concealing means as the concealed population in the target area.

A population calculation method according to one aspect of the present invention is a population calculation method executed by a population calculation system for calculating concealed population in a target area, the method including an acquisition step of, by the population calculation system, acquiring the number of counted people who are counted as samples in a count area containing the target area; a population calculation step of, by the population calculation system, calculating population in the count area on the basis of the number of counted people acquired at the acquisition step and a scaling factor for determining the population in the count area on the basis of the number of counted people and calculating population in the target area on the basis of the population in the count area thus calculated; a concealing step of, by the population calculation system, concealing the population in the count area or the population in the target area on the basis of a class interval that is a product of concealment reference that is a reference value of a minimum summation unit and the scaling factor in calculation processing at the population calculation step; and an output step of, by the population calculation system, outputting the population in the target area obtained through concealment processing at the concealing step as the concealed population in the target area.

According to these aspects, when determining population in the count area from the number of counted people and determining population in the target area on the basis of the population, the population in the count area or the population in the target area is concealed on the basis of the class interval that is the product of the concealment reference and the scaling factor. In this manner, by discretely determining population in the target area using the class interval based on the concealment reference, fractions below the class interval can be properly rounded, and thus it is possible to conceal and present population while maintaining the reliability of population data at or above a certain level.

In a population calculation system according to another aspect, the concealing means may conceal the population in the target area calculated by the population calculation means on the basis of the class interval.

According to this aspect, the population in the target area that is a final result of calculation is concealed on the basis of the class interval in calculation processing, which makes it possible to conceal and present population while maintaining the reliability of population data at or above a certain level.

In a population calculation system according to still another aspect, optionally, the concealing means conceals the population in the count area calculated by the population calculation means on the basis of the class interval, and the population calculation means calculates a product of the population in the count area concealed by the concealing means and a ratio of the population in the target area to the population in the count area before concealment as the population in the target area obtained through the concealment processing.

According to this aspect, in the calculation processing, population in the count area that is an intermediate result of calculation is concealed on the basis of the class interval, and the product of the concealed population in the count area and the ratio of the population in the target area to the population in the count area before concealment is calculated as the population in the target area obtained through the concealment processing. In this manner, by concealing the population in the count area whose population is larger than that in the target area and then multiplying it by the ratio of the population in the target area to the population in the count area to calculate the concealed population in the target area, deviation from the population data before concealment can be reduced compared to the case in which population in the target area is directly concealed.

In a population calculation system according to still another aspect, optionally, the target area and the count area are the same, the concealing means conceals the population in the count area calculated by the population calculation means on the basis of the class interval, and the population calculation means calculates the population in the count area concealed by the concealing means as the population in the target area obtained through the concealment processing.

According to this aspect, when the target area and the count area are the same, the calculated population in the count area is concealed on the basis of the class interval and is calculated as the population in the target area. In this manner, even when the target area and the count area are the same, it is possible to conceal and present population while maintaining the reliability of population data at or above a certain level.

In a population calculation system according to still another aspect, optionally, the acquisition means acquires the number of counted people for each of a plurality of attributes, the population calculation means calculates the population in the count area and the population in the target area for each of the plurality of attributes on the basis of the scaling factor that is set for each of the plurality of attributes and also calculates the sum of population in the count area and the sum of population in the target area for at least two attributes out of the plurality of attributes, and the concealing means conceals the total population in the count area or the total population in the target area on the basis of the class interval that is a product of the concealment reference and a largest scaling factor among scaling factors each set for the at least two attributes.

According to this aspect, the population in the count area and the population in the target area are calculated for each of the plurality of attributes, and also the sum of population for the at least two attributes out of the plurality of attributes in these two areas is calculated. Total population in the count area or in the target area is concealed on the basis of the class interval that is the product of product the concealment reference and the largest scaling factor among scaling factors each set for the at least two attributes. Although a largest scaling factor among scaling factors for a plurality of attributes is a scaling factor for an attribute with which an individual can be most easily identified among the plurality of attributes, by concealing the total population in the target area on the basis of the largest scaling factor, a risk of an individual being identified can be suppressed.

In a population calculation system according to still another aspect, optionally, the concealing means conceals the total population in the count area or the total population in the target area on the basis of not the class interval but another class interval different from the class interval, and the other class interval is the sum of scaling factors from top to n-th (n is the concealment reference) when the scaling factors each set for the at least two attributes are arranged in descending order.

According to this aspect, concealment is performed with the sum of scaling factors from top to n-th (n is the concealment reference) when the scaling factors each set for the at least two attributes are arranged in descending order. Accordingly, it is possible to conceal population while reducing deviation from the population data before concealment.

In a population calculation system according to still another aspect, the concealing means may quantize the population into an integral multiple of the class interval when performing concealment based on the class interval.

According to this aspect, concealment is performed by quantizing the population into an integral multiple of the class interval. Accordingly, it is possible to conceal population while reducing deviation from the population data before concealment.

In a population calculation system according to still another aspect, the concealing means may, when rounding population to a specific class by quantizing the population into an integral multiple of the class interval, round the population to either one of a class whose difference from the population is the smallest and a class whose difference from the population is the subsequently smallest on the basis of the differences between the population and the respective classes.

According to this aspect, when concealing population, the differences between the population and the respective classes as candidates to which the population is to be rounded are considered, and thus it is possible to conceal the population while reducing deviation from the population data before concealment.

In a population calculation system according to still another aspect, the concealing means may quantize population into an integral multiple of the other class interval when performing concealment based on the other class interval.

According to this aspect, concealment is performed by quantizing the population into an integral multiple of the other class interval. Accordingly, it is possible to conceal population while reducing deviation from the population data before concealment.

In a population calculation system according to still another aspect, the concealing means may, when rounding population to a specific class by quantizing the population into an integral multiple of the other class interval, round the population to either one of a class whose difference from the population is the smallest and a class whose difference from the population is the subsequently smallest on the basis of the differences between the population and the respective classes.

According to this aspect, when concealing population, the difference between the population and the respective classes as candidates to which the population is to be rounded are considered, and thus it is possible to conceal population while reducing deviation from the population data before concealment.

In a population calculation system according to still another aspect, the acquisition means may, with respect to each positional information that is registered from each of mobile devices within the count area in a predetermined period of time, calculate each of feature amounts by using two or more out of time when each of the mobile devices registers the positional information, time when each of the mobile devices registers the previous positional information, and time when each of the mobile devices registers the following positional information, estimate the number of mobile devices within the count area on the basis of the sum of the feature amounts, and acquire this number as the number of counted people.

According to this aspect, on the basis of the feature amounts, the more accurate number of the counted people can be acquired.

In a population calculation system according to still another aspect, the acquisition means may, out of pieces of positional information registered by mobile devices, on the basis of pieces of positional information that are within a summation time period in which times when the mobile devices register the pieces of positional information are summed up or an expanded time period to which the summation time period is expanded, extract mobile devices that are presumed to be present in the count area within at least part of the summation time period or one piece of positional information that is generated by these mobile devices within the summation time period or the expanded time period, and on the basis of the number of the mobile devices or the number of the pieces of positional information thus extracted, estimate the number of the mobile devices within the summation time period and acquire this number as the number of counted people.

According to this aspect, because double counting of the mobile devices can be avoided, the more accurate number of the counted people can be acquired.

A population calculation system according to still another aspect is a population calculation system for calculating concealed population in a target area, the system including population calculation means for calculating population in a count area containing the target area and calculating the population in the target area on the basis of the population in the count area thus calculated; concealing means for concealing the population in the count area calculated by the population calculation means; and output means for outputting a product of the population in the count area concealed by the concealing means and a ratio of the population in the target area to the population in the count area before concealment as the concealed population in the target area.

A population calculation method according to another aspect is a population calculation method executed by a population calculation system for calculating concealed population in a target area, the method including a population calculation step of, by the population calculation system, calculating population in a count area containing the target area and calculating the population in the target area on the basis of the population in the count area thus calculated; a concealing step of, by the population calculation system, concealing the population in the count area calculated at the population calculation step; and an output step of, by the population calculation system, outputting a product of the population in the count area concealed at the concealing step and a ratio of the population in the target area to the population in the count area before concealment as the concealed population in the target area.

According to these aspects, the population in the count area and the population in the target area are calculated, and the product of the population in the count area concealed and the ratio of the population in the target area to the population in the count area before concealment is output as the concealed population in the target area. In this manner, by concealing the population in the count area whose population is larger than that in the target area and then multiplying it by the ratio of the population in the target area to the population in the count area to calculate the concealed population in the target area, deviation from the population data before concealment can be reduced compared to the case in which population in the target area is directly concealed.

**Advantageous Effects of Invention**

With the population calculation system and the population calculation method described above, it is possible to conceal and present population while maintaining the reliability of population data at or above a certain level.

**Brief Description of Drawings**

[Fig. 1] Fig. 1 is a block diagram illustrating a functional configuration of a population calculation system according to a first embodiment.
[Fig. 2] Fig. 2 is a diagram illustrating a hardware configuration of the population calculation system according to the first embodiment.
[Fig. 3] Fig. 3 is a diagram illustrating an example of a count area and a target area according to the first embodiment.
[Fig. 4] Figs. 4(a) to 4(c) are diagrams illustrating examples of information stored in a database depicted in Fig. 1.
[Fig. 5] Fig. 5 is a diagram illustrating an example of information stored in the database depicted in Fig. 1.
[Fig. 6] Fig. 6 is a flowchart illustrating processes of the population calculation system according to the first embodiment.
[Fig. 7] Fig. 7 is a block diagram illustrating a functional configuration of a population calculation system according to a second embodiment.
[Fig. 8] Fig. 8 is a diagram illustrating an example of information stored in a database depicted in Fig. 7
[Fig. 9] Fig. 9 is a flowchart illustrating processes of the population calculation system according to the second embodiment.
[Fig. 10] Fig. 10 is a diagram illustrating an example of a count area and a target area according to modification 1 of the second embodiment.
[Fig. 11] Figs. 11(a) to 11(c) are diagrams illustrating examples of information stored in the database depicted in Fig. 7.
[Fig. 12] Fig. 12 is a diagram illustrating an example stored in the database depicted in Fig. 7.
[Fig. 13] Fig. 13 is a diagram (part 1) for explaining an idea of terminal count estimation (presence count estimation).
[Fig. 14] Fig. 14 is a diagram (part 2) for explaining the idea of the terminal count estimation (presence count estimation).
[Fig. 15] Fig. 15 is a diagram (part 1) for explaining an idea of terminal count estimation (entry count estimation).
[Fig. 16] Fig. 16 is a diagram (part 2) for explaining the idea of the terminal count estimation (entry count estimation).

**Description of Embodiments**

Embodiments of the present invention will now be described in detail with reference to the attached drawings. Note that like reference sings are given to like or equivalent elements in descriptions of the drawings, and redundant explanations are omitted.

(First Embodiment)

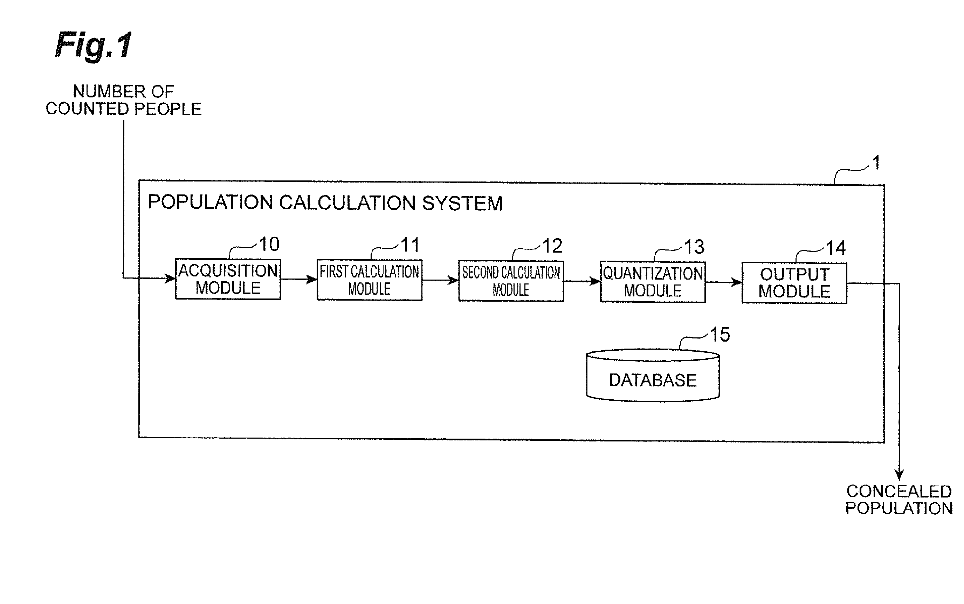

Referring to Figs. 1 to 5, functions and a configuration of a population calculation system 1 according to a first embodiment will be described. The population calculation system 1 is a computer system for calculating quantized population in a specific area. As depicted in Fig. 1, the population calculation system 1 includes an acquisition module (acquisition means) 10, a first calculation module (population calculation means) 11, a second calculation module (population calculation means) 12, a quantization module (concealing means) 13, an output module (output means) 14, and a database 15 as functional components.

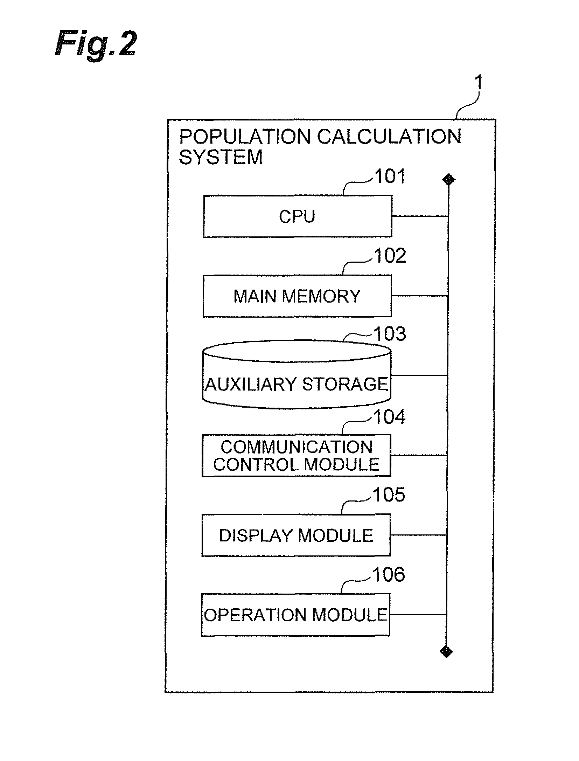

This population calculation system 1 as depicted Fig. 2 is configured with a CPU 101 for executing an operating system or an application program, for example, a main memory 102 including a ROM and a RAM, an auxiliary storage 103 including a memory or the like, a communication module 104 for performing data communication, a display module 105 including a display and the like, and an operation module 106 including a keyboard and the like. Each function depicted in Fig. 1 is implemented by loading a predetermined program into the CPU 101 and the main memory 102, causing the communication module 104, the display module 105, and the operation module 106 to operate under control of the CPU 101, and also reading or writing data to the main memory 102 or the auxiliary storage 103. The database and data necessary for processes are stored in the main memory 102 or the auxiliary storage 103.

Referring back to Fig. 1, the acquisition module 10 is means for acquiring the number of counted people who are counted as samples in a count area containing a target area.

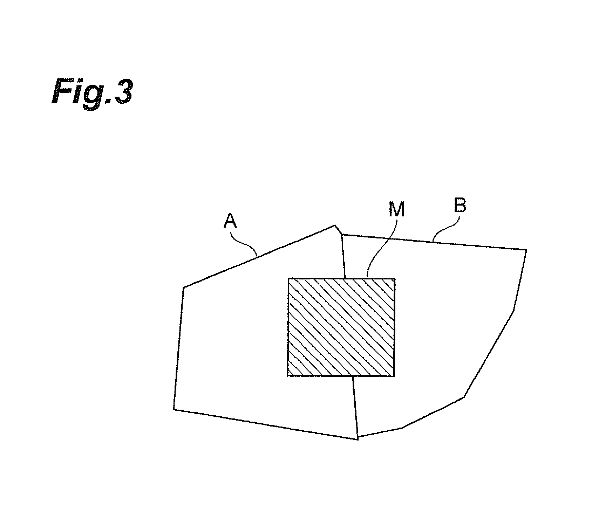

The target area is a specific geographical range estimated population in which is to be calculated, and the count area is a communicable range for a specific base station constituting a mobile communication network and is constituted by a plurality of sectors in the present embodiment. An example of the target area and the count area is illustrated in Fig. 3. In the example depicted in Fig. 3, in one count area constituted by sectors A and B, a mesh M that is the target area in a rectangular shape is provided. Note that the shapes, for example, of the target area and the count area are not limited.

When a mobile device enters a certain sector of a certain base station, position registration processing is performed by communication between the mobile device and the base station, and positional information indicating that the mobile device is present in the sector is stored in a predetermined database (not depicted) of the mobile communication network. Alternatively, by periodic communication between the mobile device and the base station, the position registration processing is periodically performed and the positional information is stored in the database. Accordingly, zero or more pieces of positional information can be registered in the database for each of the sectors A and B, for example. In the mobile communication network, a database in which pieces of user information on users of mobile devices are registered also exists in the mobile communication network. The acquisition module 10 sums up (counts) the number of users (the number of counted people) present in each sector for each of user attributes by referring to these databases. At this time, the acquisition module 10 counts mobile devices in each sector as the number of users.

The acquisition module 10 may acquire the number of counted people on the basis of pieces of positional information of mobile devices acquired by GPSs, for example, that are built in the mobile devices. The pieces of positional information of the mobile devices acquired by the GPSs, for example, are stored in the predetermined database of the mobile communication network. The acquisition module 10 refers to this database and the database in which the pieces of user information are registered and sums up the number of pieces of positional information that indicate presence in the count area, thereby sums up the number of users present in the count area for each of the user attributes. When the count area and the target area are the same or they indicate almost the same geographic range, the acquisition module 10 may acquire the number of counted people by summing up the number of pieces of positional information that indicate presence in the target area instead of the count area. Note that summation conditions or summation method when the acquisition module 10 acquires the number of counted people are not limited.

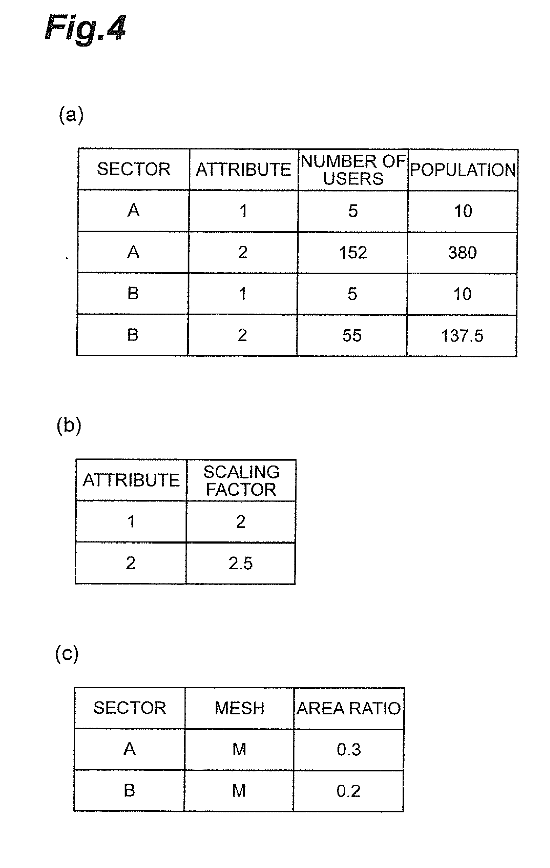

The "number of users" column in Fig. 4(a) indicates the number of counted people that the acquisition module 10 acquires in the sectors A and B. The acquisition module 10 may acquire the number of counted people for each of attributes. In the example of Fig. 4(a), the number of users is summed up separately for two types of attributes 1 and 2. In Fig. 4(a), attributes are abstractly expressed with the attribute 1 and the attribute 2, but the number of users may be summed up by any approach such as for each gender (male, female) or for each age group (teens, twenties, thirties, ...). Accordingly, the number of records prepared for a certain sector is not necessarily two. In the example of Fig. 4(a), as depicted in the "number of users" column, the acquisition module 10 acquires information indicating that the number of users with the attribute 1 in the sector A is five, the number of users with the attribute 2 in the sector A is 152, the number of users with the attribute 1 in the sector B is five, and the number of users with the attribute 2 in the sector B is 55. The information in Fig. 4(a) acquired by the acquisition module 10 is stored in the database 15 by the acquisition module 10.

In the database 15, information given in Figs. 4(b) and (c) is stored in advance. Fig. 4(b) indicates a scaling factor for determining population in the counted area from the number of counted people. The scaling factor herein is the reciprocal of a sampling rate in a sampling survey. For example, when the sampling rate is 50%, the scaling factor is two. In other words, the scaling factor is a number indicating a number by which the number of counted people as a sample is multiplied to obtain the number in the general population, and population in the count area can be calculated by multiplying the number counted people by the scaling factor. In the example of Fig. 4, for example, the number of users with the attribute 1 in the sector A is five and the scaling factor for the attribute 1 is two, and thus the population of the attribute 1 in the sector A becomes $5 \times 2 = 10$ that is a product of the number of users and the scaling factor.

Fig. 4(c) indicates the area ratio of a target area contained in a count area to the count area. For example, Fig. 4(c) indicates that the area of the mesh M contained in the sector A equals 30% of the area of the sector A, and the area of the mesh M contained in the sector B equals 20% of the area of the sector B.

The first calculation module 11 is means for calculating population in a count area on the basis of the number of counted people acquired by the acquisition module 10 and the scaling factor for determining population in the count area from the number of counted people. The first calculation module 11 may calculate population in the count area for each of attributes on the basis of the scaling factor for each of the attributes.

The first calculation module 11 calculate, as the population of the attribute 1 in the sector A, $5 \times 2 = 10$ that is a product of the number of users with the attribute 1 in the sector A and the scaling factor for the attribute 1. Similarly, the first calculation module 11 calculates $152 \times 2.5 = 380$ as the population of the attribute 2 in the sector A, $5 \times 2 = 10$ as the population of the attribute 1 in the sector B, and $55 \times 2.5 = 137.5$ as the population of the attribute 1 in the sector B. The first calculation module 11 stores these calculation results in the database 15 as in the "population" column depicted in Fig. 4(a).

The second calculation module 12 is means for calculating population in the target area on the basis of the population in the count area calculated. The second calculation module 12 may calculate population in the target area for each of attributes.

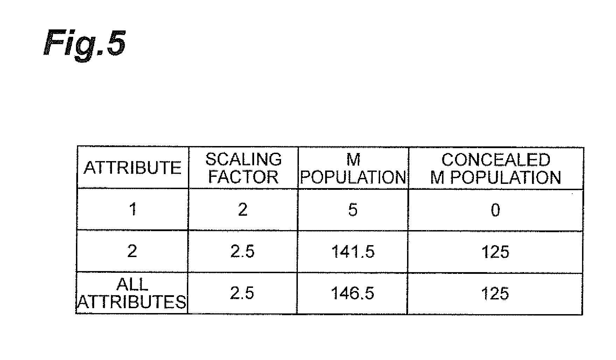

The second calculation module 12 calculates, as the population of the attribute 1 in the mesh M, $10 \times 0.3 + 10 \times 0.2 = 5$ from the population of the attribute 1 in the sector A, the population of the attribute 1 in the sector B, the area ratio of the mesh M contained in the sector A to the sector A, and the area ratio of the mesh M contained in the sector B to the sector B. Similarly, the second calculation module 12 calculates $380 \times 0.3 + 137.5 \times 0.2 = 141.5$ as the population of attribute 2 in the mash M. In addition, the second calculation module 12 calculates $5 + 141.5 = 146.5$ that is the sum of population of all attributes in the mesh M as the total population in the mesh M. The second calculation module 12 stores these calculation results in the database 15 as in the "M population" (indicating the population in the mesh M) column of the table depicted in Fig. 5.

The quantization module 13 is means for concealing population in the target area on the basis of a class interval that is a product of concealment reference that is a reference value of a minimum summation unit and the scaling factor in calculation processing by the second calculation module 12. In the present embodiment, the quantization module 13 is explained as a module for quantizing the population in the target area into an integral multiple of the class interval, but the method of concealment is not limited to this.

The quantization module 13 calculates the class interval that is a product of the concealment reference and the scaling factor for each attribute. The concealment reference herein is a reference value of the minimum number of people in summation unit. For example, when the number of users is several as a result of summing up the number of users, there is a possibility that individuals are easily identified. Accordingly, by avoiding the number of users from becoming equal to or smaller than a predetermined number of people as a result of summation, summation by which individuals the number of which is equal to or smaller than the predetermined number of people are not identified becomes possible. This predetermined number of people is the concealment reference. In the present embodiment, the concealment reference is uniformly assumed to be 10 regardless of types of attribute or areas.

When determining population of the attribute 1, the quantization module 13 calculates $10 \times 2 = 20$ as the class interval for the attribute 1. Next, the quantization module 13 quantizes five that is the population of the attribute 1 in the mesh M into an integral multiple of 20 that is the class interval. The quantization module 13, when rounding population to a predetermined class by quantizing the population into an integral multiple of the class interval, rounds either one of a class whose difference from the population is the smallest and a class whose difference from the population is the subsequently smallest. Herein, the class whose difference from population is the smallest is zero (the difference is five), and the class whose difference from the population is the subsequently smallest is 20 (the difference is 15). Out of these two classes, the class (0) whose value is smaller is defined as a lower value, the class (20) whose value is larger is defined as an upper value. In the present embodiment, it is assumed that the quantization module 13 rounds population to be rounded to the lower value. Accordingly, the quantization module 13 quantizes five that is the population of the attribute 1 in the mesh M into zero. Similarly, the quantization module 13 quantizes 141.5 that is the population of the attribute 2 in the mesh M into 125 on the basis of an integral multiple of $10 \times 2.5 = 25$ that is the class interval for the attribute 2.

The quantization module 13 may quantize the total population in the target area into an integral multiple of a class interval that is a product of the concealment reference and the largest scaling factor among scaling factors each set for attributes.

The largest scaling factor among scaling factors set for the attributes 1 and 2 is 2.5 for the attribute 2, and thus the quantization module 13 calculates $10 \times 2.5 = 25$ as a class interval for the total population. Next, the quantization module 13 quantizes 146.5 that is the total population in the mesh M to obtain 125 that is an integral multiple of 25 being the class interval.

In the present embodiment, the quantization module 13 rounds population to the lower value, but the method of rounding is not limited to this. For example, the quantization module 13 may round up population to the upper value. Alternatively, the quantization module 13 may round population unilaterally to one of the upper value and the lower value whose difference from the population is smaller than that of the other, or may round population to either one of the upper value and the lower value in a random manner.

Furthermore, the quantization module 13 may, when rounding population by quantizing the population into an integral multiple of the class interval, round the population to either one of a class whose difference from the population is the smallest and a class whose difference from the population is the subsequently smallest on the basis of the differences between the population and the respective classes.

A method of rounding population in a random manner will be described below in which probability of the population being rounded to the upper value is increased when the population to be rounded is closer to the upper value and probability of the population being rounded to the lower value is increased when the population is closer to the lower value. It is assumed that population to be rounded is e, the lower value is r1, the upper value is r2, the probability of the population e being rounded to r1 is (r2-e)/(r2-r1), and the probability of the population e being rounded to r2 is (e-r1)/(r2-r1). For example, when rounding population of the attribute 1 in the mesh M, e=5, r1=0, and r2=20, and thus the probability that the quantization module 13 rounds the population of the attribute 1 in the mesh M to the lower value becomes (20-5)/(20-0)=75(%) and the probability that the quantization module 13 rounds it to the upper value becomes (5-0)/(20-0)=25(%).

The quantization module 13 may quantize the total population in the target area, without using the above class interval, by using as another class interval the sum of scaling factors from top to n-th (n is the concealment reference) when the scaling factors each set for the attributes are arranged in descending order.

For example, it is assumed that respective scaling factors for 10 people present in a certain area are 10, 5, 2, 5, 3, 1, 2, 4, 6, and 3. When the concealment reference is three herein, the quantization module 13 determines 21 that is the sum of 10, 6, and 5 that are scaling factors from the top to the third of scaling factors for the above 10 people arranged in the order of scaling factor as the other class interval. The quantization module 13 quantizes the total population into an integral multiple of the other class interval. Herein, when the quantization module 13 calculates the class interval as a product of the concealment reference and the largest scaling factor, the class interval becomes $3 \times 10 = 30$ and, as described above, using 21 that is the other class interval reduces deviation from the population data before and after the concealment. However, when the number of people with an attribute for which the scaling factor is largest is equal to or larger than the concealment reference, the other class interval becomes the same as that in the case when using the largest scaling factor.

The output module 14 is means for outputting the population in the target area obtained through quantization (concealment) processing by the quantization module 13 as concealed population in the target area.

More specifically, the output module 14 stores the quantized population in the database 15 as in the "concealed M population" column of Fig. 5. In the example of Fig. 5, 0, 125, and 125 that are the population of the attribute 1, the population of the attribute 2, and the total population in the mesh M, respectively, are stored in the database 15. Note that the method for outputting the concealed population is not limited. The output module 14 may output the concealed population on the display module 105 such as a display, or may output it on another system connected by a network.

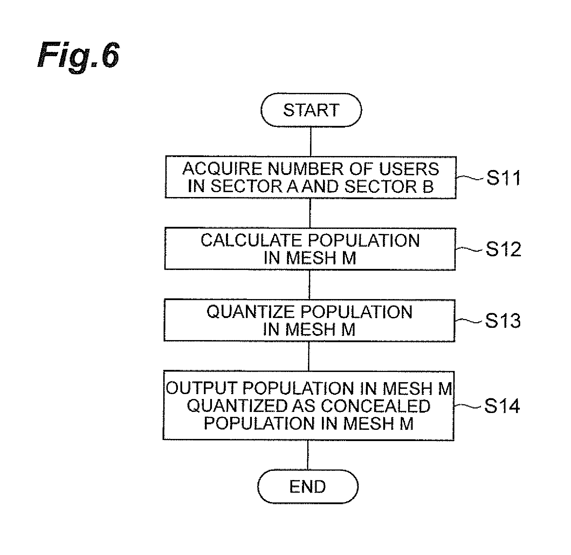

Referring to Fig. 6, operation of the population calculation system 1 depicted in Fig. 1 will be described hereinafter, and also a population calculation method according to the present embodiment will be described.

To begin with, the acquisition module 10 acquires the numbers of users in the sectors A and B containing the mesh M (step S11, acquisition step). Next, the first calculation module 11 calculates populations in the sectors A and B on the basis of the number of users acquired at step S11 and the scaling factor, and the second calculation module 12 calculates population in the mesh M on the basis of the populations in the sectors A and B thus calculated (step S 12, population calculation step). Next, the quantization module 13 conceals the population in the mesh M calculated at step S12 on the basis of the class interval that is the product of the concealment reference and the scaling factor (step S13, concealing step). Next, the output module 14 outputs the population in the mesh M concealed at step S13 as the concealed population in the mesh M (step S14, output step).

As described above, according to the present embodiment, when determining populations in the sectors A and B from the number of counted people and determining the population in the mesh M on the basis of the populations, the populations in the sectors A and B or the population in the mesh M is quantized into an integral multiple of the class interval that is the product of the concealment reference and the scaling factor. In this manner, by discretely determining the population in the mesh M using the class interval based on the concealment reference, fractions below the class interval can be properly rounded, and thus it is possible to conceal and present population while maintaining the reliability of population data at or above a certain level.

In addition, according to the present embodiment, populations in the sectors A and B and population in the mesh M are calculated for each of attributes, and also the sum of the populations of all attributes in these two areas is calculated. Furthermore the total population in the sectors A and B or the mesh M is quantized into an integral multiple of the class interval that is the product of the concealment reference and the largest scaling factor among scaling factors each set for the attributes. Although the largest scaling factor among scaling factors for the respective attributes is a scaling factor for an attribute with which an individual can be most easily identified among the respective attributes, by concealing the total population in the target area on the basis of the largest scaling factor, a risk of an individual being identified can be suppressed.

In addition, according to the present embodiment, quantization is performed by using as the class interval the sum of scaling factors from top to n-th (n is the concealment reference) when the scaling factors each set for the attributes are arranged in descending order. Accordingly, it is possible to quantize population while reducing deviation from the population data before quantization.

In addition, according to the present embodiment, when quantizing population, the differences between the population and the respective classes as candidates to which the population is to be rounded are considered, and thus it is possible to quantize the population while reducing deviation from the population data before quantization.

Not only when quantizing the total population of all attributes in the mesh M but even when quantizing the total population for at least two attributes out of three or more attributes in the mesh M, the largest scaling factor or the other class interval described above can be similarly set. For example, the quantization module 13 may, when determining the total population for three attributes 1, 3, and 5 out of attributes 1 to 5 in the mesh M, perform quantization processing by using the class interval that is the product of the concealment reference and the largest scaling factor among scaling factors for the attributes 1, 3, and 5. In addition, the quantization module 13 may, in a similar case, perform quantization by using as the class interval the sum of scaling factors from top to n-th when scaling factors for persons belonging to the attributes 1, 3, and 5 are arranged in descending order.

(Second Embodiment)

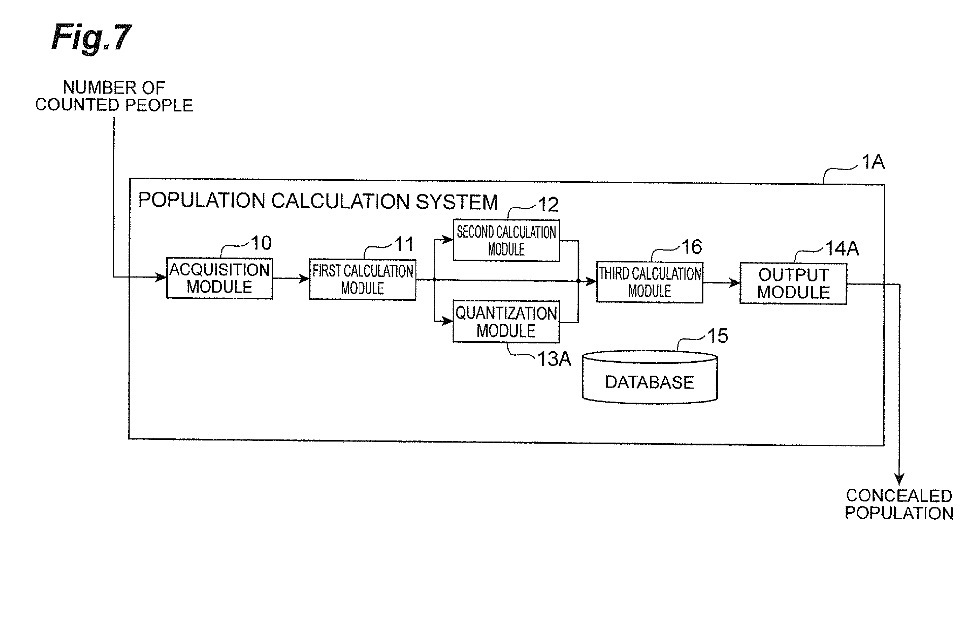

Functions and configuration of a population calculation system 1A according to a second embodiment will now be described with reference to Figs. 3, 4, 7, and 8. As depicted in Fig. 7, the population calculation system 1A includes a quantization module 13A instead of the quantization module 13 and an output module 14A instead of the output module 14, and further includes a third calculation module 16 (population calculation means). Because the other components in the present embodiment are the same as those in the first embodiment, explanations thereof are omitted. Because the hardware configuration of the population calculation system 1A and the method for implementing each functional component by the hardware configuration are also the same as those in the first embodiment, explanations thereof are also omitted.

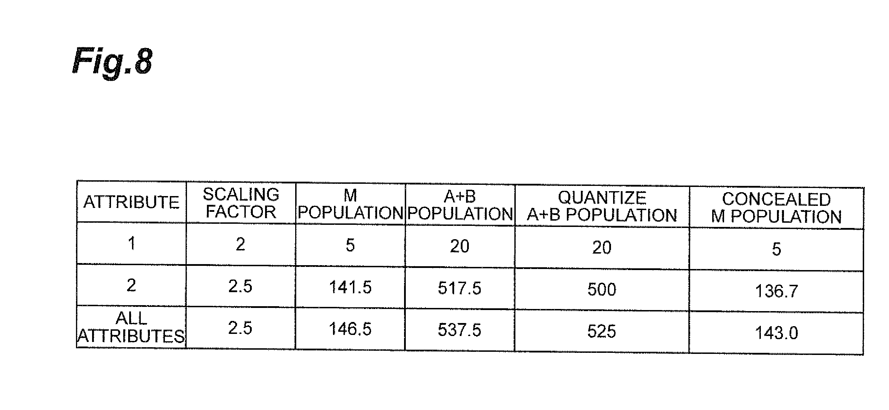

It is assumed similarly to the first embodiment that the population calculation system 1A according to the second embodiment calculates concealed population in the mesh M contained in the sectors A and B depicted in Fig. 3. In addition, it is assumed that initial values listed in Figs. 4(b) and (c) are given, values in the "number of users" column depicted in Fig. 4(a) are acquired by the acquisition module 10, and values in the "population" column depicted in the same drawing are acquired by the first calculation module 11. In addition, it is assumed similarly to the first embodiment that the second calculation module 12 calculates population in the mesh M, and stores the calculation results in the database 15 as in the "M population" column of the table depicted in Fig. 8.

The first calculation module 11 calculates 10+10=20 by using values in the "population" column in Fig. 4(a) as the population of the attribute 1 in the sectors A and B (also referred to as a sector A+B). Similarly, the first calculation module 11 calculates 380+137.5=517.5 as the population of the attribute 2 in the sector A+B. In addition, the first calculation module 11 calculates 20+517.5=537.5 as the population of all attributes in the sector A+B. The first calculation module 11 stores these calculation results in the database 15 as in the "A+B population" (indicating the population in the sector A+B) column of the table depicted in Fig. 8.

The quantization module 13A is means for concealing population in the count area on the basis of the class interval that is the product of the concealment reference and the scaling factor in calculation processing by the first calculation module 11. In the present embodiment, explanations are made on the assumption that the quantization module 13A quantizes population in the target area into an integral multiple of the class interval, but the method of concealment is not limited to this.

The quantization module 13A quantizes 20 that is the population of the attribute 1 in the sector A+B into 20 by using $10 \times 2 = 20$ that is the class interval. Similarly, the quantization module 13A quantizes 517.5 that is the population of the attribute 2 in the sector A+B into 500 by using $10 \times 2.5 = 25$ that is the class interval.

The quantization unti13A may quantize the total population of all attributes in the count area into an integral multiple of the class interval that is the product of the concealment reference and the largest scaling factor among scaling factors each set for the attributes.

The largest scaling factor among scaling factors set for the attributes 1 and 2 is 2.5 for the attribute 2, and thus the quantization module 13A calculates $10 \times 2.5 = 25$ as the class interval. Next, the quantization module 13A quantizes 537.5 that is the total population in the sector A+B into an integral multiple of 25 that is the class interval to obtain 525. The population in the sector A+B quantized by the quantization module 13A is stored in the database 15 as in the "quantized A+B population" (indicating the population in the sector A+B thus quantized) column in Fig. 8.

Note that the quantization module 13A rounds population down to the lower value in the above-described quantization but the method of rounding is not limited to this. For example, similarly to the first embodiment, the quantization module 13A may round population up to the upper value, may round population down to the lower value with which difference between the population and the class is smaller, or may round population to either class in a random manner.

In addition, similarly to the quantization module 13 of the first embodiment, the quantization module 13A may quantize population of all attributes in the sector A+B into an integral multiple of the class interval that is the sum of scaling factors from top to the number of people as the concealment reference in the order of scaling factors each set for the attributes.

The third calculation module 16 is means for calculating a product of the population in the count area quantized by the quantization module 13A and an area population ratio that is a ratio of the population in the target area to the population in the count area before quantization as the population in the target area obtained through quantization processing.

For the attribute 1, the third calculation module 16 calculates $20 \times (5/20)=5$ as the product of 20 that is the population in the sector A+B quantized by the quantization module 13A and 5/20 that is the area population ratio. Similarly, for the attribute 2, the third calculation module 16 calculates $500 \times (141.5/517.5)=136.7$ as the above-described product. Similarly, with respect to the population of all attributes in the sector A+B, the third calculation module 16 calculates $525x(146.5/537.5)=143.0$ as the above-described product. Note that numbers are rounded down to the nearest tenth in the present embodiment.

The output module 14A outputs the population in the target area obtained through quantization (concealment) processing as the concealed population in the target area.

More specifically, the output module 14A stores the quantized population in the database 15 as in the "concealed M population" column in Fig. 8. In the example of Fig. 8, 5, 136.7, and 143.0 that are the population of the attribute 1, the population of the attribute 2, and the total population in the mesh M, respectively, are stored in the database 15. Note that the method of outputting the concealed population is not limited. The output module 14A may output the concealed population to the display module 105 such as a display, or may output it to another system connected by a network.

When focusing on the values in the "concealed M population" of the table depicted in Fig. 8, if the populations of the attributes 1 and 2 are simply added, the result is $5+136.7=141.7$, which does not match 143.0 that is the concealed total population. In this manner, after concealment of population, the total population does not necessarily match the total population value of the respective attributes. Accordingly, for example, even when the concealed population of all attributes and the concealed population of the attribute 2 are open to the public, the concealed population of the attribute 1 cannot be known by calculating the difference therebetween, and thus a risk of an individual being identified can be suppressed.

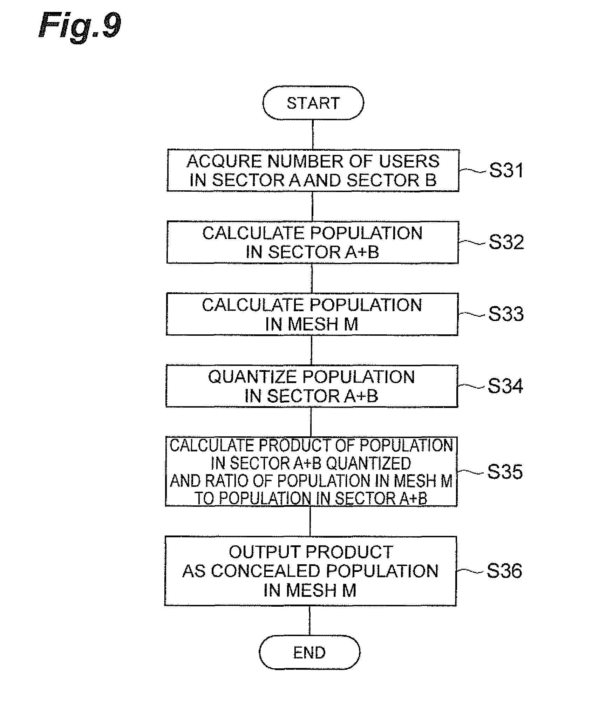

Referring to Fig. 9, operation of the population calculation system 1A depicted in Fig. 7 will be described hereinafter, and also a population calculation method according to the present embodiment will be described.

To begin with, the acquisition module 10 acquires the number of users in the sectors A and B containing the mesh M (step S31, acquisition step). Next, the first calculation module 11 calculates population in the sectors A and B on the basis of the number of users acquired at step S31 and the scaling factor (step S32, population calculation step). Next, the second calculation module 12 calculates population in the mesh M on the basis of the population in the sectors A and B calculated at step S32 (step S33, population calculation step). Next, the quantization module 13A conceals the population in the sector A+B calculated at step S32 on the basis of the class interval that is the product of the concealment reference and the scaling factor (step S34, concealing step). Next, the third calculation module 16 calculates a product of the population in the sector A+B concealed at step S34 and the ratio of the population in the mesh M calculated at step S33 to the population in the sector A+B calculated at step S32 (step S35, third calculation step). Next, the output module 14A outputs the product calculated at step S35 as the concealed population in the mesh M (step S36, output step).

As described above, according to the present embodiment, in the calculation processing, the population in the sectors A and B that is an intermediate result of calculation is quantized into an integral multiple of class interval that is the product of the concealment reference that is a reference value of a minimum summation unit and the scaling factor, and the product of the population in the sectors A and B thus quantized and the area population ratio is calculated as the population in the mesh M obtained through quantization processing. Although it is possible to conceal population while maintaining the reliability of the population data at or above a certain level even when directly concealing the population in the mesh M, by concealing the population in the sectors A and B whose population is larger than that in the mesh M and then multiplying it by the area population ratio to calculate the concealed population in the mesh M in this manner, deviation from the population data before concealment can be reduced compared to the case in which population in the mesh M is directly concealed as described above.

However, when the mesh M and the sector A+B are the same or represent almost the same geographical range, the third calculation module 16 may calculate population in the sector A+B quantized by the quantization module 13A as the population in the mesh M and the output module 14A may output this population in the mesh M as the concealed population. Even when the mesh M and the sector A+B represent the same geographical range in this manner, it is possible to conceal and present population while maintaining the reliability of the population data at or above a certain level. Such processing is substantially the same as the processing of multiplying the quantized population in the count area by an area population ratio of "1" to obtain the concealed population.

In addition, not only when quantizing the total population of all attributes in the sector A+B but even when quantizing the total population for at least two attributes out of three or more attributes in the sector A+B, the largest scaling factor or the other class interval described above can be similarly set. For example, the quantization module 13A may, when determining the total population for three attributes 1, 3, and 5 out of attributes 1 to 5 in the sector A+B, perform quantization processing by using the class interval that is the product of the concealment reference and the largest scaling factor among scaling factors for the attributes 1, 3, and 5. In addition, the quantization module 13A may, in a similar case, perform quantization by using as the class interval the sum of scaling factors from top to n-th when scaling factors for persons belonging to the attributes 1, 3, and 5 are arranged in descending order.

(Modification 1 of Second Embodiment)

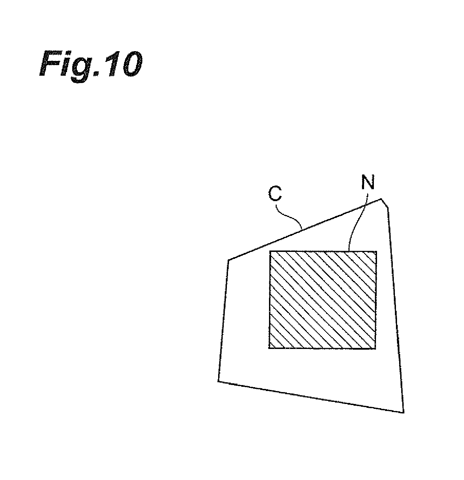

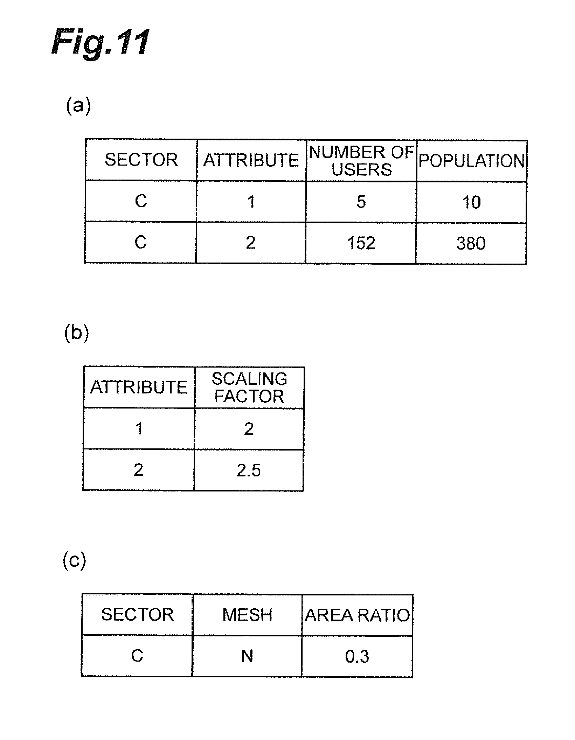

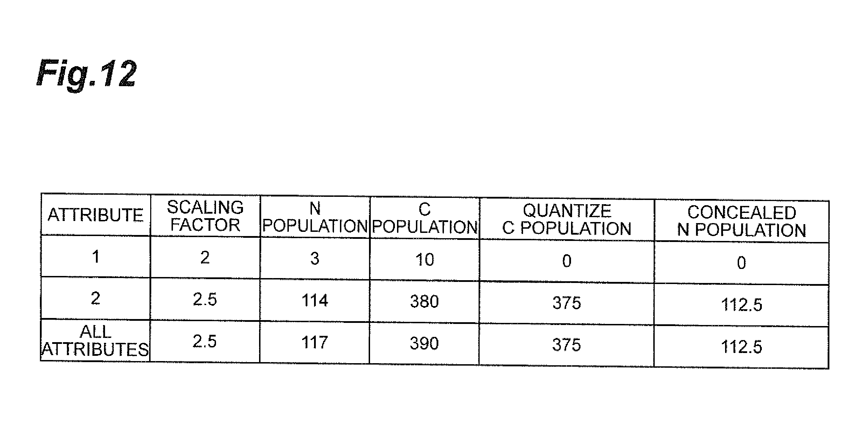

Modification 1 of the population calculation system 1A according to the second embodiment will be described below with reference to Figs. 10 to 12. In the present modification, the population calculation system 1A calculates concealed population in a mesh N that is a target area contained in a sector C that is a single count area as depicted in Fig. 10. Because each column in Figs. 11 and 12 is the same as that in Fig. 4 and Fig. 5, explanations thereof are omitted.

The acquisition module 10 acquires five as the number of users with the attribute 1 in the sector C and 152 as the number of users with the attribute 2 in the sector C as depicted in Fig. 11(a).

The first calculation module 11 calculates $5\times2=10$ that is a product of the number of users with the attribute 1 in the sector C and the scaling factor for the attribute 1 as the population of the attribute 1 in the sector C. Similarly, the first calculation module 11 calculates $152\times2.5=380$ as the population of the attribute 2 in the sector C. In addition, the first calculation module 11 calculates $10+380=390$ as the population of all attributes in the sector C.

The second calculation module 12 calculates $10\times0.3=3$ as the population of the attribute 1 in the mesh N. Similarly, the second calculation module 12 calculates $380\times0.3=114$ as the population of the attribute 2 in the mesh N. In addition, the second calculation module 12 calculates $3+114=117$ as the population of all attributes in the mesh N.

The quantization module 13A quantizes 10 that is the population of the attribute 1 in the sector C into an integral multiple of $10\times2=20$ that is the class interval to obtain zero. Similarly, the quantization module 13A quantizes 380 that is the population of the attribute 2 in the sector C into an integral multiple of $10\times2.5=25$ that is the class interval to obtain 375. Similarly, the quantization module 13A quantizes 390 that is the population of all attributes in the sector C into an integral multiple of $10\times2.5=25$ that is the class interval calculated with the largest scaling factor to obtain 375.

The third calculation module 16 calculates $0\times(3/10)=0$ as the population of the attribute 1 in the mesh N, calculates $375\times(114/380)=112.5$ as the population of the attribute 2 in the mesh N, and calculates $375\times(117/390)=112.5$ as the total population in the mesh N.

The output module 14A outputs 0, 112.5, and 112.5 that are concealed population of the attribute 1, concealed population of the attribute 2, and concealed total population in the mesh N, respectively.

Note that the population calculation system 1 of the first embodiment also can calculate the concealed population in the mesh N depicted in Fig. 10. The population calculation system according to the present invention can calculate concealed population in a target area lying astride two or more count areas, and can also calculate concealed population in a target area contained in a single count area. Procedures for calculating the concealed population are the same regardless of positional relationship between the count area and the target area.

(Modification 2 of Second Embodiment)

Modification 2 of the population calculation system 1A according to the second embodiment will be described below. In the present modification, the population calculation system 1A further includes a concealing module (concealing means).

The concealing module conceals population in a count area calculated by the first calculation module 11. The method for concealment is not limited to a specific method. One example of the method for concealment is the method for quantization by the quantization module 13A in the second embodiment.

Another example of the method for concealment by the concealing module is a method in which a value smaller than the concealment reference or the product of the concealment reference and the largest scaling factor is omitted. For example, when the population in the count area is five, this value is smaller than 10 that is the concealment reference and thus omitted by the concealment module, and finally the concealed population is not output. In contrast, for example, when the population in the count area is 20, this value is larger than 10 that is the concealment reference and thus is not omitted by the concealing module, and the concealed population in the count area becomes 20.

Another example of the method for concealment by the concealing module is a method in which populations are concealed by a specific concealing method for respective unit attributes each of which is a unit defining a scaling factor and then are summed up. In the second embodiment, as depicted in Fig. 8, the quantization module 13A quantized 537.5 that is the total population in A+B into an integral multiple of 25 that is the class interval to obtain 525 as the quantized A+B population of all attributes. Instead of this quantization method, for example, the concealing module adds 20 obtained by quantizing 20 that is the A+B population of the attribute 1 into an integral multiple of 20 that is the class interval for the attribute 1 and 500 obtained by quantizing 517.5 that is the A+B population of the attribute 2 into an integral multiple of 25 that is the class interval for the attribute 2 to obtain 520 as the concealed A+B population of all attributes. By this concealment method, the concealing module can conceal a composite attribute including a plurality of unit attributes by adding up values obtained by concealing the unit attributes.

Another example of the method for concealment by the concealing module is a method in which the class interval in the second embodiment is not set and values are varied by random numbers. In the second embodiment, the quantization module 13 rounds up to the upper value or down to the lower value when rounding population to a specific class by quantizing the population into an integral multiple of the class interval. In contrast, in the concealment method in which values are varied by random numbers, for example, the population is concealed into a random value with a probability based on a probability density function having a variance with a magnitude depending on the class interval.

Another example of the method for concealment by the concealing module is a method in which population is concealed into a real-number multiple of the class interval that is the product of the concealment reference and the scaling factor. Herein, when it is assumed that the class interval is y and the integral number is z, for example, in the first embodiment and the second embodiment, the quantization module 13 and the quantization module 13A conceal population into 0, y, 2y, 3y, ..., zy, .... Instead of this concealment method, the quantization module 13 and the quantization module 13A conceal the population into 0, 1.1y, 2.2y, 3.3y, ..., 1.1zy, ..., for example.

Another example of the method for concealment by the concealing module is a method in which population is concealed into a value obtained by adding a predetermined real number to an integral multiple of the class interval that is the product of the concealment reference and the scaling factor. Herein, when it is assumed that the class interval is y and the integral number is z, for example, in the first embodiment and the second embodiment, the quantization module 13 and the quantization module 13A conceal population into 0, y, 2y, 3y, ..., zy, .... Instead of this concealment method, the quantization module 13 and the quantization module 13A conceal the population into 0, 0.5, y+0.5, 2y+0.5, 3y+0.5, ..., zy+0.5, ..., for example.

Note that all of the methods for concealment by the concealing module described in the modification 2 of the second embodiment are applicable also to the first embodiment.

The output module 14A outputs the product of the population in the count area concealed by the concealing module and the area population ratio that is the ratio of the population in the target area calculated by the second calculation module 12 to the population in the count area before concealment as the concealed population in the target area. A specific example of calculating the product of the population in the count area concealed and the area population ratio is similar to calculations performed by the third calculation module 16 in the second embodiment, explanations thereof is omitted.

In the foregoing, the present invention has been described in detail on the basis of the embodiments thereof. However, the present invention is not limited to the above-described embodiments. In the present invention, various changes may be made without departing from the scope thereof.

The population calculation systems 1 and 1A may be constructed of one computer, or may be constructed of a plurality of computers. When the population calculation systems 1 and 1A are constructed of a plurality of computers, functions of the population calculation systems 1 and 1A may be implemented by sending and receiving input and output of the respective functional components between servers.

In the embodiments described above, the first calculation module 11 and the second calculation module 12 calculate population in the count area on the basis of the number of counted people and the scaling factor, and calculates population in the target area on the basis of the population in the count area thus calculated, but the procedure for calculating population in the target area is not limited to this. For example, the population calculation means may calculate the number of counted people in the target area on the basis of number of counted people and the area ratio of the target area to the count area, and calculate population in the target area on the basis of the number of counted people in the target area thus calculated and the scaling factor.

In the embodiments described above, the count area is a spatial sector in mobile communication, but is not limited to this. For example, actual households surveyed for ratings in a television program rating survey can be the count area. Thus, the count area only has to be a region in which the number of people can be counted as a sample.

Furthermore, in the population calculation systems 1 and 1A in the respective embodiments described above, temporary data calculated by the functional components is stored in the database 15, but may be stored in a working memory or a database system, for example.

In addition, the population calculation systems 1 and 1A of the respective embodiments described above calculate concealed population, but the present invention can be applied to purposes other than the calculation of population. For example, it may be applied to a computer system in a field where data is concealed and presented while the reliability of the data is maintained at or above a certain level.

Furthermore, in the population calculation systems 1 and 1A of the respective embodiments described above, when acquiring the number of users, the acquisition module 10 refers to the predetermined database in the mobile network to sum up and acquire the number of users, but the acquisition method is not limited to this. For example, the acquisition module 10 may acquire the number of counted people from static compiled data that is compiled in advance such as compiled data from questionnaires.

Furthermore, in the population calculation systems 1 and 1A of the respective embodiments described above, when the acquisition module 10 refers to the database in which positional information and user information are registered and performs summation, the acquisition module 10 may perform a de-identification process including conversion to irreversible codes by a one-way function on user identifiers (i.e., telephone numbers) included in the positional information or the user information. As this one-way function, a keyed hash function based on a hash function recommended by assessment projects or assessment bodies from home and abroad can be used.

Furthermore, in the population calculation systems 1 and 1A of the respective embodiments described above, when acquiring the number of counted people, the acquisition module 10 may estimate and acquire the number of counted people (the number of mobile devices) by presence count estimation or entry count estimation both of which are terminal count estimation described below, for example.

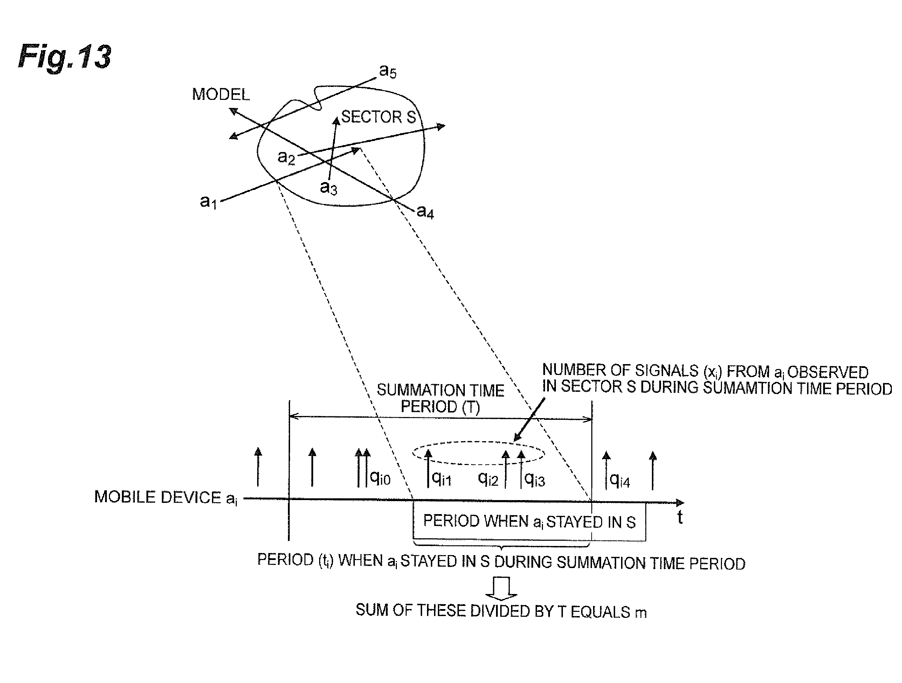

The idea of the presence count estimation and a calculation method thereof will be described hereinafter. As in a model depicted in Fig. 13, it is assumed that n pieces of mobile devices $a_1$, $a_2$, ..., an pass through a sector S during a certain summation time period (length T) and a staying time of each mobile device $a_i$ in the sector S within the summation time period is $t_i$ ($0<t_i\leq T$). In this case, the number m of mobile device present in the sector S (actually, the average of the number m of mobile devices present in the sector S within the summation time period) is represented by the following formula (1).

[Formula 1]

$$m = \sum_{i=1}^{n} t_i \diagup T \qquad (1)$$

In other words, a result obtained by dividing the sum of the staying time $t_i$ of each mobile device $a_i$ in the sector S within the summation time period by the length T of the summation time period is estimated as the number of mobile devices m. Note that the actual value of the staying time $t_i$ of the mobile device $a_i$ in the sector S within the summation time period cannot be measured, but a signal that each mobile device $a_i$ transmits to register the positional information can be measured.

Signals that the mobile device $a_i$ transmits in the sector S within the summation time period in time order are:

[Formula 2]

$$q_{i1}, \quad q_{i2}, \ldots, \quad q_{ix_i}$$

Assuming that ($x_i$ is the total number of signals that the mobile device $a_i$ transmits in the sector S within the summation time period), a value of m can be estimated from $q_{ij}$ observed (j is an integer that is equal to or larger than 1 and equal to or smaller than $x_i$).

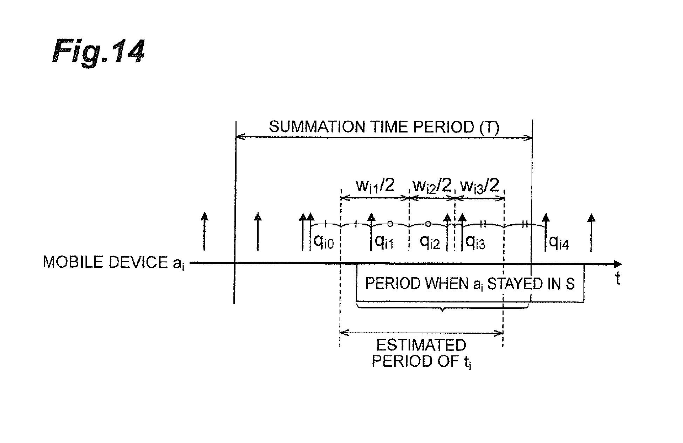

A calculation method for estimating the number of mobile devices will now be described with reference to Fig. 14. It is assumed that the density at which a signal $q_{ij}$ is transmitted from the mobile device $a_i$ (i.e., the number of signals per unit time) is $p_i$. In this case, if the probability of signals being transmitted is independent of sectors, an expected value $E(x_i)$ of the total number $x_i$ of signals that the mobile device $a_i$ transmits in the sector S within the summation time period is $E(x_i)=t_i\times p_i$, and thus the following formula (2) holds for the expected value $E(t_i)$ of the staying time $t_i$ of the mobile device $a_i$ in the sector S within the summation time period.

$$E(t_i) = x_i / p_i \qquad (2)$$

Assuming herein that transmission time of the signal $q_{ij}$ is $u_{ij}$, the density $p_{ij}$ of the signal $q_{ij}$ is given by the following formula (3).

$$p_{ij} = 2/(u_{i(j+1)} - u_{i(j-1)}) \qquad (3)$$

Assuming herein that $(u_{i(j+1)} - u_{i(j-1)})$ in the above formula (3) is a feature amount $w_{ij}$ for the signal $q_{ij}$, the above formula (3) becomes as follows. In other words, the feature amount $w_{ij}$ can be calculated in association with the reciprocal of the density $p_{ij}$.

$$p_{ij} = 2/(u_{i(j+1)} - u_{i(j-1)}) = 2/w_{ij} \qquad (4)$$

At this time, the density $p_i$ is given by
[Formula 3]

$$p_i = x_i / E(t_i) = (x_i / \sum_{j=1}^{x_i} w_{ij}) \times 2 \qquad (5)$$

the estimated value $E(m)$ of the number of mobile devices $m$ can be calculated by the following formula (6).
[Formula 4]

$$E(m) = (\sum_{i=1}^{n} \sum_{j=1}^{x_i} (w_{ij}/2)) / T = (\sum_{i=1}^{n} \sum_{j=1}^{x_i} w_{ij}) / 2T \qquad (6)$$

As depicted in Fig. 14, it is assumed that the mobile device $a_i$ transmits signals $q_{i1}$, $q_{i2}$, and $q_{i3}$ both within the summation time period and in a period when the mobile device $a_i$ stays in the sector S and transmits a signal $q_{i0}$ immediately before the signal $q_{i1}$, and transmits a signal $q_{i4}$ immediately after the $q_{i3}$, and times when the signals $q_{i0}$, $q_{i1}$, $q_{i2}$, $q_{i3}$, and $q_{i4}$ are transmitted are $u_{i0}$, $u_{i1}$, $u_{i2}$, $U_{i3}$, and $u_{i4}$, respectively, the above-described idea is equivalent to estimating the staying time $t_i$ of the mobile device $a_i$ in the sector S within the summation time period to be the time period from (the midpoint between $u_{i0}$ and $u_{i1}$) to (the midpoint between $u_{i3}$ and $u_{i4}$). Note that the mobile device $a_i$ transmits the signal $q_{i4}$ during the stay in the sector S even not within the summation time period. However, to maintain consistency in the estimated period of the staying time $t_i$, as one example herein, a process is described in which estimation is not performed on premise that the ending time of the staying time $t_i$ is the same as the ending time of the summation time period T.

Subsequently, the idea of the entry count estimation and a calculation method thereof will be described hereinafter. Note that in the present specification, the entering terminal count means the number of unique mobile devices that stay in an area (sector) on which summation is to be performed during at least part of the summation time period. The term "unique" herein means that the number of entering terminals is a number after subtracting the duplicate counts of a same mobile device.

One example of a process of estimating the entering terminal count performed by the acquisition module 10 will be described below. In this example, the entering terminal count is determined by using an estimated staying period of each of mobile devices in a sector. To begin with, in pieces of position registration information whose user identifiers are the same, the acquisition module 10 calculates the estimated staying period during which mobile devices stay in a certain given sector for each of the mobile devices on the basis of pieces of in-sector position data in which times at which pieces of position registration information are acquired are within an expanded time period described later and whose sector IDs indicate the certain given sector, and pieces of out-sector position data that are adjacent to the pieces of in-sector position data when pieces of position registration information are arranged in time sequence on the basis of times at which the pieces of position registration information are acquired and whose sector IDs indicate outside of the certain given sector. Note that the above-mentioned "expanded time period" herein means, as one example, a period to which the summation time period is expanded by a predetermined duration (e.g., 1 hour) before and after the summation time period, more specifically, a time period between the time as a start point to which time goes back from the summation starting time t0 by the predetermined duration and the time as an end point to which time proceeds from the summation ending time t1 by the predetermined duration.

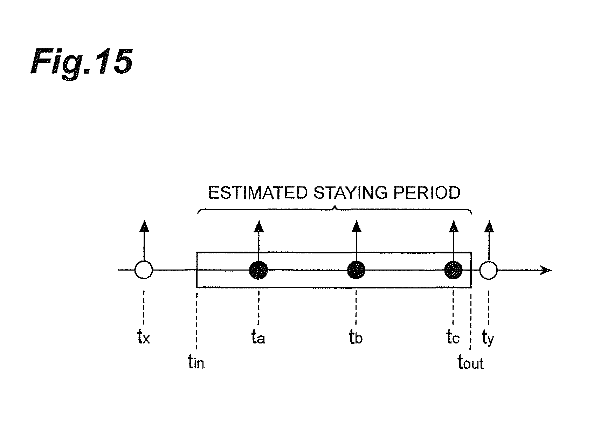

As depicted in Fig. 15, when a series of pieces of position registration information on a same mobile device acquired during the expanded time period is arranged in time sequence on the basis of the times at which the pieces of position registration information are acquired, pieces of in-sector position data that have sector IDs of pieces of position registration information indicating a certain given sector are represented by black circles, and pieces of out-sector position data that are adjacent to the pieces of in-sector positional information and have sector IDs indicating outside of the certain given sector are represented by white circles, respectively, the time $t_{in}$ corresponding to a proportionally divided point (midpoint as an example) between the acquisition time $t_a$ of the earliest piece of in-sector position data in time sequence and the acquisition time $t_x$ of the piece of out-sector position data adjacent to the earliest piece of in-sector position data is assumed to be the start time of the estimated staying period. Similarly, the time $t_{out}$ corresponding to a proportionally divided point (midpoint as an example) between the acquisition time $t_c$ of the latest piece of in-sector position data in time sequence and the acquisition time ty of the piece of out-sector position data adjacent to the latest piece of in-sector position data is assumed to be the end time of the estimated staying period. Accordingly, the period represented by a rectangle in Fig. 15, that is, the period from the time $t_{in}$ to the time $t_{out}$ is calculated as the estimated staying period of the mobile device.

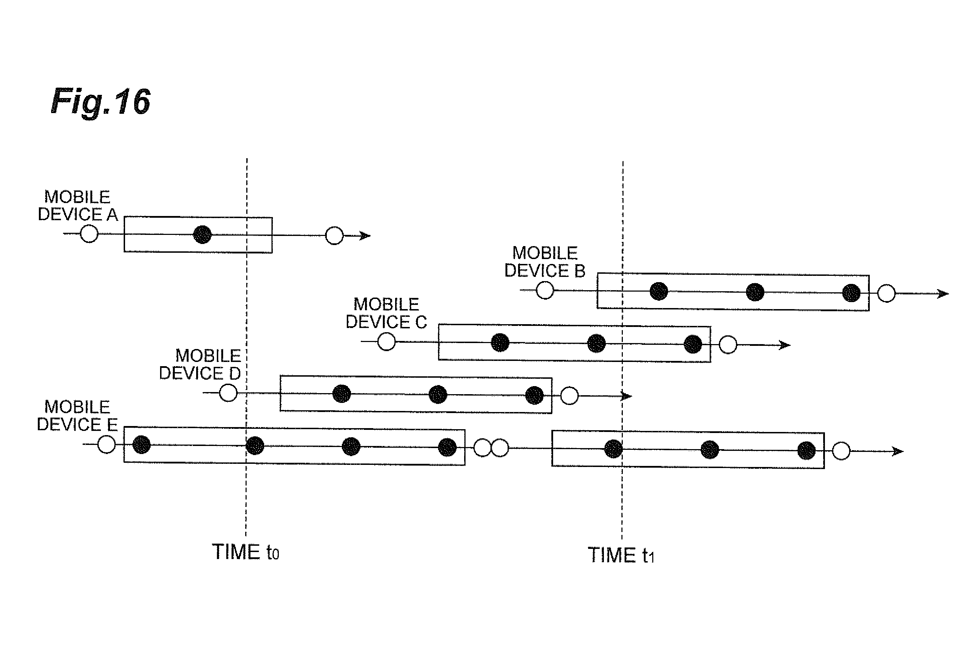

Then, the acquisition module 10 extracts mobile devices whose estimated staying times thus calculated overlap with the summation time period. Fig. 16 is a diagram in which a series of pieces of position registration information on mobile devices A to E acquired during the expanded time period is arranged for each of the mobile devices in time sequence in the order of acquisition time of position registration information along the abscissa direction and, in this Fig. 16, pieces of in-sector position data whose sector IDs indicate the certain given sector are represented by black circles, and pieces of out-sector position data whose sector IDs indicate outside of the certain given sector are represented by white circles, respectively. Supposing that only pieces of in-sector position data in which acquisition times of pieces of position registration information are within the summation time period (time t0 to time t1) are focused on, three mobile devices C to E are extracted as the corresponding mobile devices.

However, mobile devices whose estimated staying period represented by the rectangles in Fig. 16 overlap with the summation time period (time t0 to time t1) are considered to be five mobile devices A to E, and thus the acquisition module 10 extracts five mobile devices A to E. Accordingly, the mobile devices A and B that are excluded when focusing on only the pieces of in-sector position data represented by black circles can be presumed to stay in the certain given sector somewhere in the summation time period. By sequentially performing this process for each sector, mobile devices that stay in each sector somewhere in the summation time period can be extracted for each sector. Note that the above-described method using the estimated staying period is one example and other methods may be adopted. Other methods will be described later.

Next, the acquisition module 10 counts the number of mobile devices thus extracted for each sector ID, and estimates the counted number thus obtained as the entering terminal count in each sector within the summation time period. As described above, the acquisition module 10 determines the entering terminal count for each sector.

Note that the method for estimating the entering terminal count by the acquisition module 10 using the estimated staying period is one example, and other methods may be adopted. As another method, in pieces of position registration information on a same mobile device, the acquisition module 10 may extract one piece of position registration information (position registration information that is acquired at the earliest time as an example) out of pieces of in-sector position data in which times when pieces of position registration information are acquired are within the summation time period. When one piece of position registration information is extracted for each mobile device in this manner, accuracy of extraction is a little lower than that of the above-described method using the estimated staying period, but the estimated staying period for each mobile device does not have to be calculated, and thus it is possible to extract one piece of position registration information for each mobile device with a low processing load. In this case, the acquisition module 10 could estimate the entering terminal count by counting the number of pieces of position registration information thus extracted. However, when extracting one piece of position registration information for each mobile device, it is not indispensable to extract the piece of position registration information that is acquired at the earliest time, and another piece of positional information may be extracted. For example, a piece of position registration information that is acquired at the latest time may be extracted, or a piece of position registration information that is acquired at time closest to the midpoint of an observation period.

Note that in the above-described embodiments, as positional information of a mobile device, other than positional information or position registration information acquired by GPS, for example, any information with which a position can be grasped is usable.

Examples of other applicable fields of the present invention include a television program rating survey, a political party approval rating survey, a web questionnaire survey, and a census.

**Reference Signs List**

1, 1A... population calculation system, 10... acquisition module (acquisition means), 11... first calculation module (population calculation means), 12... second calculation module (population calculation means), 13, 13A... quantization module (concealing means), 14, 14A... output module (output means), 15... database, 16... third calculation module (population calculation means)

**Claims**

1. A population calculation system for calculating concealed population in a target area, the system comprising:

   acquisition means for acquiring the number of counted people who are counted as samples in a count area containing the target area;
   population calculation means for calculating population in the count area on the basis of the number of counted people acquired by the acquisition means and a scaling factor for determining the population in the count area on the basis of the number of counted people and calculating population in the target area on the basis of the population in the count area thus calculated;
   concealing means for concealing the population in the count area or the population in the target area on the basis of a class interval that is a product of concealment reference that is a reference value of a minimum summation unit and the scaling factor in calculation processing by the population calculation means; and
   output means for outputting the population in the target area obtained through concealment processing by the concealing means as the concealed population in the target area.

2. The population calculation system according to claim 1, wherein the concealing means conceals the population in the target area calculated by the population calculation means on the basis of the class interval.

3. The population calculation system according to claim 1, wherein
   the concealing means conceals the population in the count area calculated by the population calculation means on the basis of the class interval, and
   the population calculation means calculates a product of the population in the count area concealed by the concealing means and a ratio of the population in the target area to the population in the count area before concealment as the population in the target area obtained through the concealment processing.

4. The population calculation system according to claim 1, wherein the target area and the count area are the same, the concealing means conceals the population in the count area calculated by the population calculation means on the basis of the class interval, and
   the population calculation means calculates the population in the count area concealed by the concealing means as the population in the target area obtained through the concealment processing.

5. The population calculation system according to any one of claims 1 to 4, wherein
   the acquisition means acquires the number of counted people for each of a plurality of attributes,
   the population calculation means calculates the population in the count area and the population in the target area for each of the plurality of attributes on the basis of the scaling factor that is set for each of the plurality of attributes and calculates the sum of population in the count area and the sum of population in the target area for at least two attributes out of the plurality of attributes, and
   the concealing means conceals the total population in the count area or the total population in the target area on the basis of the class interval that is a product of the concealment reference and a largest scaling factor among scaling factors each set for the at least two attributes.

6. The population calculation system according to claim 5, wherein
   the concealing means conceals the total population in the count area or the total population in the target area on the basis of not the class interval but another class interval different from the class interval, and
the other class interval is the sum of scaling factors from top to n-th (n is the concealment reference) when the scaling factors each set for the at least two attributes are arranged in descending order.

7. The population calculation system according to any one of claims 1 to 5, wherein
the concealing means quantizes the population into an integral multiple of the class interval when performing concealment based on the class interval.

8. The population calculation system according to claim 7, wherein
the concealing means, when rounding population to a specific class by quantizing the population into an integral multiple of the class interval, rounds the population to either one of a class whose difference from the population is the smallest and a class whose difference from the population is the subsequently smallest on the basis of the differences between the population and the respective classes.

9. The population calculation system according to claim 6, wherein
the concealing means quantizes population into an integral multiple of the other class interval when performing concealment based on the other class interval.

10. The population calculation system according to claim 9, wherein
the concealing means, when rounding population to a specific class by quantizing the population into an integral multiple of the other class interval, rounds the population to either one of a class whose difference from the population is the smallest and a class whose difference from the population is the subsequently smallest on the basis of the differences between the population and the respective classes.

11. The population calculation system according to any one of claims 1 to 10, wherein
the acquisition means, with respect to each positional information that is registered from each of mobile devices within the count area in a predetermined period of time, calculates each of feature amounts by using two or more out of time when each of the mobile devices registers the positional information, time when each of the mobile devices registers the previous positional information, and time when each of the mobile devices registers the following positional information, estimates the number of mobile devices within the count area on the basis of the sum of the feature amounts, and acquires this number as the number of counted people.

12. The population calculation system according to any one of claims 1 to 10, wherein
the acquisition means, out of pieces of positional information registered by mobile devices, on the basis of pieces of positional information that are within a summation time period in which times when the mobile devices register the pieces of positional information are summed up or an expanded time period to which the summation time period is expanded, extracts mobile devices that are presumed to be present in the count area within at least part of the summation time period or one piece of positional information that is generated by these mobile devices within the summation time period or the expanded time period, and on the basis of the number of the mobile devices or the number of the pieces of positional information thus extracted, estimates the number of the mobile devices within the summation time period and acquires this number as the number of counted people.

13. A population calculation system for calculating concealed population in a target area, the system comprising:

population calculation means for calculating population in a count area containing the target area and calculating the population in the target area on the basis of the population in the count area thus calculated;
concealing means for concealing the population in the count area calculated by the population calculation means; and
output means for outputting a product of the population in the count area concealed by the concealing means and a ratio of the population in the target area to the population in the count area before concealment as the concealed population in the target area.

14. A population calculation method executed by a population calculation system for calculating concealed population in a target area, the method comprising:

an acquisition step of, by the population calculation system, acquiring the number of counted people who are counted as samples in a count area containing the target area;
a population calculation step of, by the population calculation system, calculating population in the count area on the basis of the number of counted people acquired at the acquisition step and a scaling factor for determining the population in the count area on the basis of the number of counted people and calculating population in the target area on the basis of the population in the count area thus calculated;

a concealing step of, by the population calculation system, concealing the population in the count area or the population in the target area on the basis of a class interval that is a product of concealment reference that is a reference value of a minimum summation unit and the scaling factor in calculation processing at the population calculation step; and

an output step of, by the population calculation system, outputting the population in the target area obtained through concealment processing at the concealing step as the concealed population in the target area.

15. A population calculation method executed by a population calculation system for calculating concealed population in a target area, the method comprising:

a population calculation step of, by the population calculation system, calculating population in a count area containing the target area and calculating the population in the target area on the basis of the population in the count area thus calculated;

a concealing step of, by the population calculation system, concealing the population in the count area calculated at the population calculation step; and

an output step of, by the population calculation system, outputting a product of the population in the count area concealed at the concealing step and a ratio of the population in the target area to the population in the count area before concealment as the concealed population in the target area.

*Fig.1*

NUMBER OF COUNTED PEOPLE

POPULATION CALCULATION SYSTEM 1

10 ACQUISITION MODULE

11 FIRST CALCULATION MODULE

12 SECOND CALCULATION MODULE

13 QUANTIZATION MODULE

14 OUTPUT MODULE

15 DATABASE

CONCEALED POPULATION

# *Fig.2*

POPULATION CALCULATION SYSTEM — 1

101 CPU

102 MAIN MEMORY

103 AUXILIARY STORAGE

104 COMMUNICATION CONTROL MODULE

105 DISPLAY MODULE

106 OPERATION MODULE

Fig.3

# Fig.4

(a)

| SECTOR | ATTRIBUTE | NUMBER OF USERS | POPULATION |
|--------|-----------|-----------------|------------|
| A | 1 | 5 | 10 |
| A | 2 | 152 | 380 |
| B | 1 | 5 | 10 |
| B | 2 | 55 | 137.5 |

(b)

| ATTRIBUTE | SCALING FACTOR |
|-----------|----------------|
| 1 | 2 |
| 2 | 2.5 |

(c)

| SECTOR | MESH | AREA RATIO |
|--------|------|------------|
| A | M | 0.3 |
| B | M | 0.2 |

# *Fig.5*

| ATTRIBUTE | SCALING FACTOR | M POPULATION | CONCEALED M POPULATION |
|-----------|----------------|--------------|------------------------|
| 1 | 2 | 5 | 0 |
| 2 | 2.5 | 141.5 | 125 |
| ALL ATTRIBUTES | 2.5 | 146.5 | 125 |

*Fig.6*

```
              ( START )
                  │
   ┌──────────────────────────────┐
   │  ACQUIRE NUMBER OF USERS      │ ~S11
   │  IN SECTOR A AND SECTOR B     │
   └──────────────────────────────┘
                  │
   ┌──────────────────────────────┐
   │  CALCULATE POPULATION         │ ~S12
   │        IN MESH M              │
   └──────────────────────────────┘
                  │
   ┌──────────────────────────────┐
   │  QUANTIZE POPULATION          │ ~S13
   │        IN MESH M              │
   └──────────────────────────────┘
                  │
   ┌──────────────────────────────┐
   │ OUTPUT POPULATION IN MESH M   │
   │ QUANTIZED AS CONCEALED        │ ~S14
   │ POPULATION IN MESH M          │
   └──────────────────────────────┘
                  │
              ( END )
```

# Fig.7

NUMBER OF
COUNTED PEOPLE

POPULATION CALCULATION SYSTEM ⌐12

1A

10
ACQUISITION
MODULE

11
FIRST CALCULATION
MODULE

SECOND CALCULATION
MODULE

16
THIRD CALCULATION
MODULE

14A
OUTPUT
MODULE

QUANTIZATION
MODULE

13A

15
DATABASE

CONCEALED
POPULATION

EP 2 618 299 A1

**Fig.8**

| ATTRIBUTE | SCALING FACTOR | M POPULATION | A+B POPULATION | QUANTIZE A+B POPULATION | CONCEALED M POPULATION |
|---|---|---|---|---|---|
| 1 | 2 | 5 | 20 | 20 | 5 |
| 2 | 2.5 | 141.5 | 517.5 | 500 | 136.7 |
| ALL ATTRIBUTES | 2.5 | 146.5 | 537.5 | 525 | 143.0 |

EP 2 618 299 A1

## Fig.9

```
                    ┌──────────┐
                    │  START   │
                    └──────────┘
                         │
        ┌──────────────────────────────────┐
        │   ACQURE NUMBER OF USERS          │── S31
        │   IN SECTOR A AND SECTOR B        │
        └──────────────────────────────────┘
                         │
        ┌──────────────────────────────────┐
        │   CALCULATE POPULATION            │── S32
        │   IN SECTOR A+B                   │
        └──────────────────────────────────┘
                         │
        ┌──────────────────────────────────┐
        │   CALCULATE POPULATION            │── S33
        │   IN MESH M                       │
        └──────────────────────────────────┘
                         │
        ┌──────────────────────────────────┐
        │   QUANTIZE POPULATION             │── S34
        │   IN SECTOR A+B                   │
        └──────────────────────────────────┘
                         │
        ┌──────────────────────────────────┐
        │ CALCULATE PRODUCT OF POPULATION   │
        │   IN SECTOR A+B QUANTIZED         │── S35
        │ AND RATIO OF POPULATION IN MESH M │
        │   TO POPULATION IN SECTOR A+B     │
        └──────────────────────────────────┘
                         │
        ┌──────────────────────────────────┐
        │   OUTPUT PRODUCT                  │
        │   AS CONCEALED POPULATION         │── S36
        │   IN MESH M                       │
        └──────────────────────────────────┘
                         │
                    ┌──────────┐
                    │   END    │
                    └──────────┘
```

*Fig.10*

# Fig.11

(a)

| SECTOR | ATTRIBUTE | NUMBER OF USERS | POPULATION |
|--------|-----------|-----------------|------------|
| C | 1 | 5 | 10 |
| C | 2 | 152 | 380 |

(b)

| ATTRIBUTE | SCALING FACTOR |
|-----------|----------------|
| 1 | 2 |
| 2 | 2.5 |

(c)

| SECTOR | MESH | AREA RATIO |
|--------|------|------------|
| C | N | 0.3 |

## Fig.12

| ATTRIBUTE | SCALING FACTOR | N POPULATION | C POPULATION | QUANTIZE C POPULATION | CONCEALED N POPULATION |
|---|---|---|---|---|---|
| 1 | 2 | 3 | 10 | 0 | 0 |
| 2 | 2.5 | 114 | 380 | 375 | 112.5 |
| ALL ATTRIBUTES | 2.5 | 117 | 390 | 375 | 112.5 |

*Fig.13*

MODEL

SECTOR S

$a_5$

$a_2$

$a_3$

$a_1$

$a_4$

NUMBER OF SIGNALS ($x_i$) FROM $a_i$ OBSERVED
IN SECTOR S DURING SUMAMTION TIME PERIOD

SUMMATION TIME
PERIOD (T)

$q_{i0}$   $q_{i1}$   $q_{i2}$   $q_{i3}$   $q_{i4}$

MOBILE DEVICE $a_i$

t

PERIOD WHEN $a_i$ STAYED IN S

PERIOD ($t_i$) WHEN $a_i$ STAYED IN S DURING SUMMATION TIME PERIOD

SUM OF THESE DIVIDED BY T EQUALS m

## Fig.14

SUMMATION TIME PERIOD (T)

$w_{i1}/2$    $w_{i2}/2$   $w_{i3}/2$

$q_{i0}$    $q_{i1}$    $q_{i2}$    $q_{i3}$    $q_{i4}$

MOBILE DEVICE $a_i$ ————————————————————— $t$

PERIOD WHEN $a_i$ STAYED IN S

ESTIMATED
PERIOD OF $t_i$

*Fig.15*

ESTIMATED STAYING PERIOD

tx   tin   ta   tb   tc   ty   tout

EP 2 618 299 A1

*Fig.16*

## INTERNATIONAL SEARCH REPORT

| | International application No. |
|---|---|
| | PCT/JP2011/071044 |

A.  CLASSIFICATION OF SUBJECT MATTER
*G06Q50/00* (2006.01) i

According to International Patent Classification (IPC) or to both national classification and IPC

B.  FIELDS SEARCHED

Minimum documentation searched (classification system followed by classification symbols)
G06Q50/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2003-122877 A  (Oki Electric Industry Co., Ltd.), 25 April 2003 (25.04.2003), paragraphs [0012] to [0025], [0049] (Family: none) | 1-15 |
| Y | Atsuhiro TAKI, "Shukeihyo ni Okeru Cell Hitoku Mondai to sono Kenkyu Doko", Internet, 2003, pages 1 to 14, [retrieval date] 10 November 2011 (10.11.2011) | 1-15 |
| Y | JP 2009-181469 A  (Pioneer Corp.), 13 August 2009 (13.08.2009), paragraph [0015] (Family: none) | 11 |

☒  Further documents are listed in the continuation of Box C.　　　　☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 November, 2011 (10.11.11) | 29 November, 2011 (29.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/071044

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2000-46856 A  (Kokusai Kogyo Co., Ltd.), 18 February 2000 (18.02.2000), paragraphs [0007] to [0024] (Family: none) | 12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003030373 A